# EUROPÄISCHE PATENTSCHRIFT

(11) **EP 3 542 049 B1**
(45) Veröffentlichungstag und Bekanntmachung des Hinweises auf die Patenterteilung: **05.05.2021**
(21) Anmeldenummer: 17832042.0
(22) Anmeldetag: 14.11.2017
(51) Int. Cl.: F03B 17/00, F03B 13/06

(54) **ENERGIESPEICHERNDE, HYDRAULISCHE VORRICHTUNG**
ENERGY-STORING, HYDRAULIC SYSTEM
DISPOSITIF HYDRAULIQUE À ACCUMULATION D'ÉNERGIE

(30) Priorität: 15.11.2016 DE 202016106400 U
(43) Veröffentlichungstag der Anmeldung: 25.09.2019
(73) Patentinhaber: Fürstenberg, Markus, 54550 Daun (DE)
(72) Erfinder: Fürstenberg, Markus, 54550 Daun (DE)
(74) Vertreter: btb IP Bungartz Baltzer Partnerschaft mbB Patentanwälte
(86) Internationale Anmeldenummer: PCT/EP2017/079212
(87) Internationale Veröffentlichungsnummer: WO 2018/091469

(56) Entgegenhaltungen:
- WO-A1-2014/106550
- WO-A1-2015/170830
- JP-A- 2013 181 470
- KR-A- 20130 016 443
- US-A- 4 443 707
- US-A1- 2010 253 080

## Beschreibung

Die Erfindung betrifft eine energiespeichernde, hydraulische Vorrichtung mit einem Wasserspeicher, der einen Zulauf und einen Ablauf aufweist, wobei Wasser gegen den Widerstand eines Widerstandes aus dem Wasserspeicher in ein Wasserreservoir abzulaufen vermag und ein Zulauf vorgesehen ist, über den ablaufendes Wasser ersetzendes Wasser dem Wasserspeicher zuführbar ist.

Eine energiespeichernde, hydraulische Vorrichtung dieser Art ist als Speicherkraftwerk bekannt. Bei derartigen Speicherkraftwerken wird zur Zwischenspeicherung von elektrischer Energie über eine Pumpe Wasser in einen auf einem Berg liegenden Speichersee, der als Wasserreservoir dient, gepumpt. Wird die Energie dann wiederum benötigt, wird das Wasser über Fallrohre einer am Fuß des Berges angeordneten Turbine zugeführt, die die potentielle Energie dann wieder in elektrische Energie umwandelt.

Ein Gezeitenkraftwerk, das den Tiedenhub nutzt, um den Sogtank zunächst mit Wasser zu füllen um dann bei wieder sinkendem Wasserstand einen Saugdruck im Sogtank zu erzeugen, ist aus der KR 2013 0016443 A bekannt. Bei diesem Kraftwerk wird eine Flügelradturbine, die oberhalb des Wasserspiegels im Sogtank angeordnet ist, durch zulaufendes Wasser, das aus einem höher gelegenen Wasserspeicher angesaugt wird, angetrieben, wenn der Wasserspiegel im unteren Wasserreservoir sinkt und damit ein Saugdruck in dem Sogtank erzeugt ist. Diese Technik hat den Nachteil, dass durch den Luftraum oberhalb des Wasserspiegels im Sogtank Verluste auftreten und natürlich ein Einsatz in einem Wasserreservoir mit Tiedenhub erforderlich ist. In vergleichbarer Weise erzeugt eine Vorrichtung, die aus der US 2010/0253080 A1 bekannt ist, Strom, wobei hier statt des Tiedenhubs eine extern gespeiste Pumpe für den Überdruck im oberen Wasserspeicher bereitstellt.

Ein weitgehend geschlossenes System zur Stromerzeugung, bei dem Wasser über eine Pumpe aus einem unteren Speicherreservoir in ein oberen Wasserspeicher gepumpt wird, damit es später schwerkraftgetrieben durch eine Leitung und eine in der Leitung vorgesehene Turbine nach Öffnen eines Ventils wieder herunterfließen kann, ist aus der JP 2013 181 470 A bekannt. Dieses System entspricht im Wesentlichen dem oben genannten Pumpkraftwerken. Auf ähnlichen Technik basieren auch die aus der US 4 443 707 A und der WO 2015/170830 A1 bekannten Vorrichtungen zur hydrodynamischen Stromerzeugung.

Speicherkraftwerke können effektiv eine große Menge von Energie speichern. Insbesondere in Verbindung mit der Zwischenspeicherung von elektrischer Energie, die während der Zeiten geringerer Nachfrage im Kraftwerk automatisch entsteht, sind solche Speicherkraftwerke sinnvoll. Sie haben aber den Nachteil, dass sie nur dann einsetzbar sind, wenn ein entsprechendes Höhengefälle genutzt werden kann. Im Flachland kann dies nur dann erfolgen, wenn über hochgelegte Wasserspeicher ein Wasserreservoir angelegt wird. Diese haben nicht nur den Nachteil, dass sie optisch oft nicht akzeptiert werden, sondern auch Kosten für den Aufbau des hochgelegten Wasserspeichers verursachen.

Aufgabe der Erfindung ist es daher, eine energiespeichernde, hydraulische Vorrichtung zu schaffen, die auf einfache Weise über den Hydraulikdruck eines Wasserspeichers Energie zu speichern oder natürlich oder künstlich gespeicherte Energie umzusetzen vermag, ohne dass oberhalb des Widerstandes ein Wasserreservoir angelegt werden muss.

Diese Aufgabe wird nach der Erfindung durch eine Vorrichtung nach Anspruch 1 gelöst.

Eine bevorzugte Ausgestaltung einer solchen, schwerkraftgetriebenen, hydraulischen Vorrichtung weist neben dem Wasserspeicher, dem Zulauf und dem Ablauf einen Wasserspeicher auf, der von einem Sogtank gebildet ist, der eine untere Ablauföffnung zum Auslauf des in ihm bevorrateten Wassers besitzt. Der Widerstand ist hier in Form eines Unterdrucks im Sogtank ausgebildet, wobei im oberen Bereich der Sogtank sowie der Wasserzulauf derart ausgebildet sind, dass durch die potentielle Energie, die infolge der unterschiedlichen Höhen des Wasserzulaufs und der unteren Ablauföffnung aufgebaut ist, Wasser ohne angesaugte Luftanteile unter Überwindung des Widerstandes durch den Sogtank zu fließen vermag. Der hierbei überwundene Unter- oder Saugdruck kann dann auf unterschiedliche Weise genutzt werden, zum Beispiel durch mechanische Umwandlung der Bewegung eines beweglichen, durch den Unterdruck bewegten Teils des Sogtanks.

Bevorzugt ist bei dieser Anwendung der Erfindung der Sogtank als Kolbenzylindereinheit ausgebildet, wobei die Oberseite des Sogtanks von einem reziprok im Sogtank beweglich geführten Kolbenboden gebildet ist und im Wasserzulauf sowie in der unteren Ablauföffnung Sperrventile vorgesehen sind, die derart geschaltet sind, bei einlaufendem Wasser in den Sogtank in einem Füllmodus durch ein den Wasserzulauf regelndes oberes Ventil das untere Ventil geschlossen ist und in einem Arbeitsmodus bei auslaufendem Wasser das obere Ventil geschlossen und ein den Wasserablauf durch die untere Ablauföffnung regelndes unteres Ventil geöffnet ist. Durch den Unterdruck im Sogtank wird bei ablaufendem Wasser der Kolbenboden nach unten gezogen und durch den Überdruck im Füllmodus der Kolben nach oben gedrückt. Der Kolben kann dann über eine Kolbenstange mit einem, insbesondere mit einer Turbine verbundenen Kraftabtrieb verbunden sein.

Damit keine Totpunkte auftreten, kann die Vorrichtung zwei oder mehr Sogtanks aufweisen, die in Reihe geschaltet mit einer Kurbelwelle verbunden und nach der Art eines Verbrennungs-Kolbenmotors getaktet sind. Hierzu sind Kolbenböden der Sogtanks jeweils bei einer Stellung der Kurbelwelle auf unterschiedlichen Höhen angeordnet und die Ventile nach der Art eines Kolbenmotors gesteuert.

Eine weitere, bevorzugte Umsetzung der Erfindung ist dadurch charakterisiert, dass der Wasserspeicher von einem Sogtank gebildet ist, der an seiner Unterseite mit einer Ablauföffnung in ein mit Wasser gefülltes Wasserreservoir derart hineinragt, dass die Ablauföffnung unterhalb des Flüssigkeitsspiegels im Wasserreservoir und der Sogtank mit Ausnahme des eintauchenden, unteren Bereichs oberhalb des Flüssigkeitsspiegels angeordnet ist. Der Widerstand ist dabei im oberhalb des Sogtanks vorgesehenen Wasserzulauf angeordnet und der Wasserzulauf ist derart ausgebildet, dass Wasser ohne angesaugte Luftanteile durch den Widerstand infolge des vom Ablaufen des Wassers aus der Ablauföffnung gebildeten Unterdrucks im Sogtank von oben in den Sogtank nachgesaugt wird.

Durch diesen Aspekt der Erfindung wird nun die Kinematik des Speicherkraftwerkes umgedreht. Dies erlaubt es, die Energie zu speichern und nachfolgend zu nutzen, ohne dass oberhalb des Wasserspeichers eine große Menge an Wasser bereitgestellt werden muss. Die treibende Energie wird nun vom Sogtank, der als Wasserspeicher eingesetzt wird, bereitgestellt.

Hier wird also ein Wasserreservoir verwendet, in dem dauerhaft Wasser gespeichert ist. Dieses Wasserreservoir kann ein künstliches Becken, ein See oder Teich oder gegebenenfalls auch das Grundwasser sein. Letztlich hängt dies vom Einsatzzweck der Vorrichtung ab. Der Sogtank weist eine untere Ablauföffnung auf, über die Wasser aus dem Sogtank auslaufen kann.

Damit sich der Unterdruck im Sogtank aufbauen kann, darf durch die Ablauföffnung keine Luft in den Sogtank eindringen. Hierzu ragt der Sogtank mit seinem unteren Rand in das Wasserreservoir hinein und beim Betreiben der Vorrichtung wird sichergestellt, dass der Wasserstand des Wasserreservoirs nicht so weit absinkt, dass sich dieser Zustand ändern kann. Dies ist natürlich besonders einfach, wenn als Wasserreservoir eine natürliche Wasserstelle, die beispielsweise ein See oder das Grundwasser genutzt werden kann, dessen Wasserstand weitgehend konstant ist.

Gegebenenfalls kann auf einen sinkenden Wasserstand im Wasserreservoir dadurch reagiert werden, dass der Sogtank und die mit ihm verbundenen Teile der Vorrichtung in der Höhe verstellbar ausgebildet sind. Eine vorteilhafte Ausgestaltung kann auch ein schwimmender Sogtank sein, der auf einem ponton-artigen Schwimmelement angeordnet ist und mit seinem unteren Rand, der die Ablauföffnung begrenzt, in das Wasser des Wasserreservoirs hineinragt. In diesem Fall ist, solange genug Wasser im Wasserreservoir ist, immer sichergestellt, dass der Sogtank keine Luft ziehen kann.

Der Sogtank weist bevorzugt ein großes Volumen auf. Beispielsweise kann er ein Fassungsvermögen von über 100l aufweisen, wobei das Fassungsvermögen letztlich von der Anwendung und den räumlichen Gegebenheiten abhängig ist, so dass auch deutlich größere Volumina möglich sind. Auch der Durchmesser des Sogtanks ist weitgehend frei wählbar, er sollte auf jeden Fall aber deutlich größer als der obere Zulauf sein.

Durch die untere Ablauföffnung wird nun zunächst Flüssigkeit nach unten in das Wasserreservoir auslaufen. Wäre der Sogtank oben vollständig geschlossen, würde sich in Abhängigkeit der Höhe der Flüssigkeitssäule innerhalb des Sogtankes oberhalb des Wasserspiegels ein Unterdruck einstellen. Ähnliches geschieht auch dann, wenn über den Zulauf Wasser von oben in den Sogtank eingesogen werden kann. Hier wird allerdings ein Teil des Unterdrucks durch das eintretende Wasser kompensiert.

Der in den Sogtank von oben eintretende Wasserstrom kann dann allerdings energetisch genutzt werden, um unterschiedliche Funktionen zu erfüllen. So kann die Vorrichtung verwendet werden, um die gespeicherte Energie zum Filtern von Wasser zu verwenden. In diesem Fall wird zum Beispiel als Widerstand ein Wasserfilter eingesetzt. Dieser ist oberhalb des Sogtanks angeordnet, der das Wasser durch den Wasserfilter hindurch saugt.

Der Wasserfilter kann der Widerstand selbst sein, alternativ kann auch oberhalb des Widerstandes ein Zulaufbecken vorgesehen sein, in dem der Wasserfilter angeordnet ist. Ein solcher Wasserfilter kann in einem einfachen Fall zum Beispiel auch von einer Quarzsandschicht gebildet sein. Bei einer beispielhaften Ausgestaltung ist zum Beispiel im Zulaufbecken unten eine Sicherung vorgesehen, die verhindert, dass der Quarzsand den darunterliegenden Widerstand verstopft oder in den Sogtank hineingerät. Diese Sicherung kann zum Beispiel von einer Filterlage aus geeignetem Material, zum Beispiel einer Gewebeschicht, gebildet sein.

Ist der Widerstand der Quarzsandschicht groß genug, kann auf einen zusätzlichen Widerstand unterhalb des Zulaufbeckens auch verzichtet werden. Andererseits können Quarzsandschicht und gesonderter Widerstand auch als doppelte Filtervorrichtung oder Kombination einer Filtervorrichtung mit weiteren Funktionen genutzt werden. So kann zum Beispiel als Widerstand auch eine Turbine eingesetzt werden, die alleine oder in Verbindung mit einer filternden Quarzsandschicht verwendet werden kann.

Eine Turbine wird wiederum genutzt, um den Energiespeicher zur Erzeugung von elektrischer Energie zu nutzen. Dies kommt den eingangs genannten Speicherkraftwerken in der Funktion nahe. Dabei kann die Turbine entweder zur reinen Stromerzeugung genutzt werden, so dass die Energie anderweitig Verwendung findet, oder die Energie kann zum Betreiben einer Rückführpumpe genutzt werden, die die gespeicherte Energie nutzt, um Wasser aus dem Wasserreservoir wieder in den Wasserzulauf zurückzuführen.

Die von der Turbine erzeugte elektrische Energie kann in einem Zwischenspeicher gespeichert werden, so dass zum Beispiel die Funktion der Pumpe und das Erzeugen der elektrischen Energie zueinander zeitversetzt genutzt werden können. Im Wasserzulauf oder auch in einer von der Rückführpumpe zum Wasserzulauf verlaufenden Rückführleitung können auch Zwischenspeicherbereiche vorgesehen werden, in denen Wassermengen gespeichert werden können, so dass sich eine Kombination der erfindungsgemäßen Vorrichtung mit den eingangs genannten Speicherkraftwerken ergeben kann. Dies ist im Detail ebenfalls von der Anwendung der Vorrichtung abhängig.

Ferner können in der Rückführleitung oder im Wasserzulauf auch Regelventile oder Absperrorgane vorgesehen sein. So kann beispielsweise oberhalb oder unterhalb des Widerstandes ein Absperrventil vorgesehen werden, über das der Zulauf in den Sogtank blockiert werden kann. Auf diese Weise kann die gespeicherte hydrodynamische Energie langfristig gehalten werden, wenn beispielsweise eine Filterwirkung oder die Erzeugung von Strom durch die Turbine temporär nicht benötigt wird.

Ferner ist es möglich, die Rückführpumpe beispielsweise über Solarzellen zu betreiben, so dass der Energiespeicher in Form des Sogtanks während der Zeiten hoher Sonnenstrahlung mit Energie gefüllt wird, während in den Zeiten der Dunkelheit der Energiespeicher ausschließlich zur Erzeugung von elektrischer Energie über die Turbine verwendet wird. Da der Sogtank auch dann seine Funktion erfüllt, wenn kein Wasser über die Rückführleitung oder eine sonstige Zufuhr zugeführt wird, solange über den Einlass in den Sogtank keine Luft gezogen werden kann, kann die Flüssigkeitsmenge innerhalb des Sogtanks unter Ausnutzung des hydrostatischen Druckes zum Betreiben der Turbine genutzt werden. Dies kann beispielsweise eine umweltfreundliche Alternative zur Speicherung der heimischen Solarenergie in Batterien sein.

Eine mögliche, beispielhafte Anwendung der Erfindung wäre im Heimbereich das Befüllen des Drucktanks während des Tages durch die Rückführpumpe und das Abrufen der dadurch gespeicherten Energie zur Beleuchtung des Gartens oder zum Betreiben einer Filterpumpe während der Phase der Dunkelheit. Natürlich kann die erfindungsgemäße Vorrichtung auch für sehr viel größere, auch industrielle Anwendungen genutzt werden, wenn die entsprechenden Komponenten größer gestaltet werden.

Darüber hinaus kann der erfindungsgemäße Nutzen auch dann verwendet werden, wenn keine Rückführleitung vorgesehen werden muss. So kann beispielsweise der Wasserzulauf anstelle der Rückführleitung von einer natürlichen Wasserquelle gespeist werden. Dies ist natürlich insbesondere in bergigen Gegenden möglich, bei denen das natürliche Gefälle eines Bachlaufs genutzt werden kann.

Aber auch in Verbindung mit Gebäuden kann zum Beispiel Regenwasser im Bereich der obersten Etage gesammelt werden und über ein Fallrohr der gebäudenah installierten Vorrichtung zugeführt werden. In diesem Fall wird das zugeführte Wasser ebenfalls durch den Sogtank hindurchtreten und in das Wasserreservoir eintreten. Dort kann es dann über einen Überlauf wieder abfließen, wenn auf die weitere Verwendung verzichtet werden kann.

Bei einer Heimanwendung kann das Wasserreservoir auch als Frischwasserspeicher genutzt werden. So weisen viele Gärten heutzutage unterirdische Wasserspeicher auf, über die die Gärten bewässert werden. Hier kann zum Beispiel oberhalb dieses Wasserspeichers der Sogtank, möglicherweise auch noch unterirdisch, angeordnet werden, der dann zum Beispiel von der Regenrinne mit Wasser beschickt wird. Über die oben beschriebene Turbine kann dann ein elektrischer Speicher in Form eines Akkus aufgeladen werden, der später benutzt werden kann, um über die Pumpe das Regenwasser der Gartenbewässerung zur Verfügung zu stellen. Sofern zu viel Wasser durch die Regenrohre zur Verfügung gestellt wird, kann dies entweder schon im Bereich des Wasserzulaufs oder im Bereich des Wasserreservoirs über einen geeigneten Überlauf bzw. Ablauf in die Kanalisation oder in das Grundwasser fließen.

Diese Technik hat den Vorteil, dass die Turbine oberhalb des Sogtanks angeordnet ist, wobei dann nur die wartungsanfällige Turbine oberhalb des Erdniveaus angeordnet werden muss, während alle anderen Teile im Erdboden versenkt werden können. Gleiches gilt natürlich für den Filter eines Gartenteichs.

Der Sogtank und das Wasserreservoir können aus unterschiedlichen Materialien, insbesondere Metall, Kunststoff oder auch Beton, gefertigt sein. Dabei muss der Sogtank so ausgebildet sein, dass er durch die auftretenden Drücke nicht deformiert wird. Dies kann sowohl über die Materialwahl, die Wandstärke als auch über die Formgebung erfolgen. Auch das Versenken im Erdboden kann zur Formstabilität beitragen. Das Wasserreservoir kann auch ein ohnehin bereits vorhandenes Reservoir, wie beispielsweise ein Schwimmbecken, sein.

Weitere Merkmale und Vorteile der Erfindung ergeben sich der nachfolgenden Beschreibung bevorzugter Ausführungsbeispiele anhand der Zeichnungen.

In den Zeichnungen zeigt:
- Fig. 1: eine erste Ausgestaltung der Erfindung,
- Fig. 2: eine Abwandlung der ersten Ausgestaltung der Erfindung und
- Fig. 3: eine weitere Abwandlung der Erfindung.

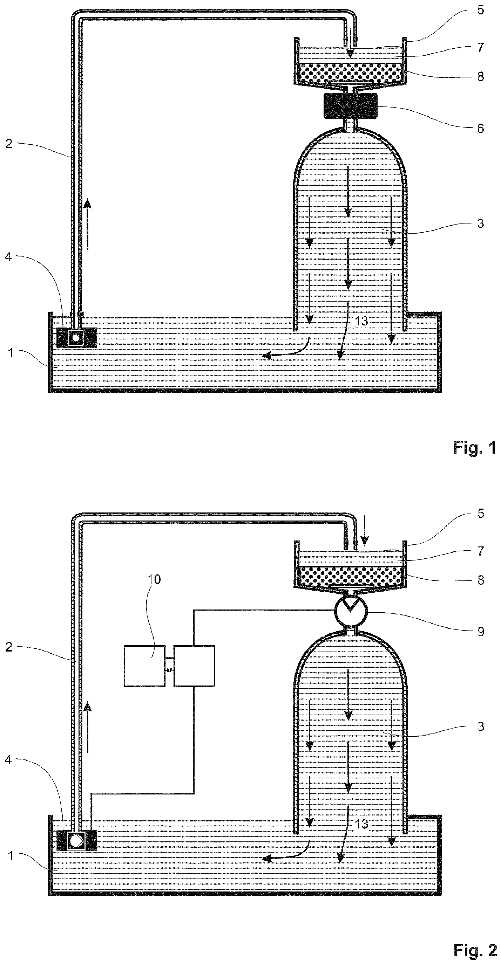

In Figur 1 ist schematisch eine erfindungsgemäße Vorrichtung zur Speicherung von Energie dargestellt. Die Vorrichtung weist einen Sogtank 3 auf, der weitgehend vollständig mit Wasser gefüllt ist. Im unteren Bereich ragt der Sogtank 3 in ein Wasserreservoir 1 hinein. Dies ist hier vereinfacht als rechteckiges Wasserbecken dargestellt, wobei dies lediglich eine schematische Ansicht ist. Gleiches gilt für die übrigen Bauteile der dargestellten Vorrichtung und deren Größenverhältnisse.

Der Sogtank 3 ist glockenartig ausgebildet und weist hier keinen Boden auf. Dieser offene Bodenbereich bildet die Ablauföffnung 13 des Sogtanks 3. Damit dieser von unten keine Luft ziehen kann, ragt die Ablauföffnung 13 so weit in das Wasserreservoir 1 hinein, dass der untere Randbereich des Sogtanks 3 vollständig in das Wasser eintaucht. Auf der linken Seite ist im Wasserreservoir 1 eine Rückführpumpe 4 vorgesehen, die Wasser aus dem Wasserreservoir 1 über eine Rückführleitung 2 einem Wasserzulauf 5 zugeführt.

Der Wasserzulauf 5 ist oberhalb des Sogtanks 3 angeordnet. Er besteht hier aus einem Zulaufbecken, in das die Rückführleitung 2 mündet. Im Zulaufbecken ist hier eine Quarzsandschicht als Filter vorgesehen. Damit der Quarzsand nicht aus dem Zulaufbecken nach unten herausfließen kann, ist unterhalb des Quarzsandes eine Filterschicht 8 vorgesehen. Im Zulaufbecken befindet sich so viel Wasser als Zulaufwasser 7, das über das Zulaufbecken keine Luft angesogen werden kann. Im gezeigten Ausführungsbeispiel wird zur Sicherstellung dieses Wasserstandes über die Rückführpumpe 4 das unten aus der Auslassöffnung des Sogtanks 3 herauslaufende Wasser in gleicher Menge wieder in das Zulaufbecken gepumpt, so dass sich ein Kreislauf des Wassers ergibt.

Alternativ oder zusätzlich kann auch ein Schwimmer oder eine sonstige Regelungstechnik eingesetzt werden, so dass über ein Absperrorgan bei zu weit im Zulauf sinkendem Wasserstand der Zulauf in den Sogtank 3 gesperrt werden kann. Vorteilhaft geschieht dies automatisch und optional mit entsprechender Signalfunktion. Diese Regelungstechnik kann auch die Rückführpumpe 4 steuern.

Unterhalb des Zulaufbeckens ist ein Widerstand 6 vorgesehen, der hier als Blackbox eingezeichnet ist. Dieser Widerstand 6 ist erfindungsgemäß als Filter ausgebildet, der Wasser, sei es Trinkwasser oder auch Teichwasser, filtert. So kann eine entsprechende Ausgestaltung der Vorrichtung auch als Trinkwasseraufbereitungsanlage verwendet werden. Hier wird über den Quarzsand eine erste Vorfilterung vorgenommen, während der als Filter ausgebildete Widerstand 6 dann die endgültige Filterung vornehmen kann.

Bei einer alternativen Ausgestaltung der Vorrichtung kann auch eine Turbine 9 zur Energieerzeugung als Widerstand 6 vorgesehen werden, so dass die im Sogtank 3 gespeicherte Energie zurückgewonnen und in elektrische Energie umgewandelt werden kann. Eine solche Ausgestaltung ist in Figur 2 dargestellt.

Die in Figur 2 oberhalb des Sogtanks 3 dargestellte Turbine 9 erzeugt durch den Unterdruck im Sogtank 3 Energie, da das Wasser aus dem Zulaufbecken durch die Turbine 9 hindurchgesaugt wird. Die Turbine 9 ist dabei so ausgestaltet, dass sie einerseits die Energie erzeugt, andererseits aber auch den notwendigen Widerstand gewährleistet, so dass das System stabil zu laufen vermag, ohne dass der Sogtank 3 zu schnell entleert wird.

Ein Speicher für elektrische Energie in Form eines Akkus 10 kann die elektrische Energie, die von der Turbine 9 erzeugt wird, zwischenspeichern. Im gezeigten Ausführungsbeispiel wird diese elektrische Energie dann genutzt, um die Rückführpumpe 4 zu betreiben.

Letztlich handelt es sich bei den dargestellten Beispielen ausschließlich um schematische Beispiele möglicher Anwendungen der Erfindung. Die Erfindung kann allerdings vielseitig verwendet werden, je nach Zulauf bzw. Ablauf, insbesondere bei natürlichem Wasserzulauf 5, der dann eine Rückführung mit Energieaufnahme entbehrlich macht, auch zur Energieerzeugung. Durch die Saugwirkung des Sogtanks 3 kann effektiv der Widerstand 6 zum Filtern, zur Energieerzeugung oder für andere Zwecke genutzt werden.

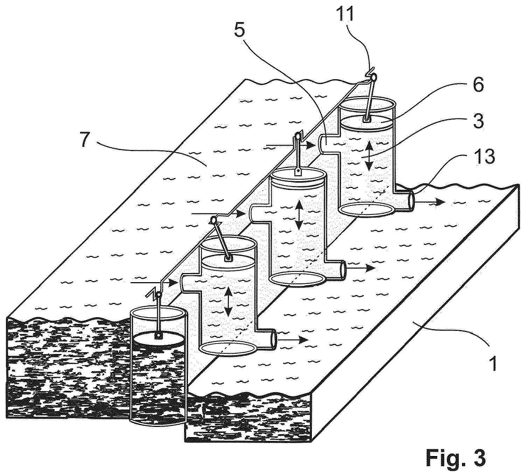

In Fig. 3 ist eine Variante der Erfindung dargestellt, bei der der Sogtank 3 als Kolbenzylindereinheit ausgebildet ist. Die Oberseite des Sogtanks 3 ist hier von einem reziprok im Sogtank 3 beweglich geführten Kolbenboden gebildet und im Wasserzulauf 5 sowie in der unteren Ablauföffnung 13 sind Sperrventile (nicht sichtbar) vorgesehen, die derart geschaltet sind, dass bei einlaufendem Wasser in den Sogtank 3 in einem Füllmodus durch ein den Wasserzulauf 5 regelndes oberes Ventil das untere Ventil geschlossen ist und in einem Arbeitsmodus bei auslaufendem Wasser das obere Ventil geschlossen und ein den Wasserablauf 5 durch die untere Ablauföffnung 13 regelndes unteres Ventil geöffnet ist. Durch den Unterdruck im Sogtank 3 wird bei ablaufendem Wasser der Kolbenboden nach unten gezogen und durch den Überdruck im Füllmodus der Kolben nach oben gedrückt. Der Kolben kann dann über eine Kolbenstange mit einem, insbesondere mit einer Turbine 9 verbundenen Kraftabtrieb verbunden sein. Diese Vorrichtung funktioniert also mit Ausnahme des Antriebs über den Wasserdruck wie ein Hubkolbenmotor.

Damit keine Totpunkte auftreten weist die Vorrichtung vier Sogtanks 3 auf, die in Reihe geschaltet mit einer Kurbelwelle 11 verbunden und nach der Art eines 4-Takt-Verbrennungs-Kolbenmotors getaktet sind. Hierzu sind Kolbenböden der Sogtanks 3 jeweils bei einer Stellung der Kurbelwelle 11 auf unterschiedlichen Höhen angeordnet und die Ventile nach der Art eines Kolbenmotors gesteuert.

### Bezuqszeichenliste:

- 1: Wasserreservoir
- 2: Rückführleitung
- 3: Sogtank
- 4: Rückführpumpe
- 5: Wasserzulauf
- 6: Widerstand
- 7: Zulaufwasser
- 8: Filterschicht
- 9: Turbine
- 10: Akku
- 11: Kurbelwelle

- 13: Ablauföffnung

## Patentansprüche

1. Schwerkraftgetriebene, hydraulische Vorrichtung mit einem Wasserspeicher, der einen Zulauf und einen Ablauf aufweist, wobei Wasser gegen einen, die Strömung bremsenden Widerstand (6) aus dem Wasserspeicher in ein Wasserreservoir (1) abzulaufen vermag und ein Wasserzulauf (5) vorgesehen ist, über den ablaufendes Wasser ersetzendes Wasser dem Wasserspeicher zuführbar ist, wobei der Wasserspeicher von einem Sogtank (3) gebildet ist, der eine untere Ablauföffnung (13) zum Auslauf des in ihm bevorrateten Wassers aufweist und an seiner Unterseite mit einer Ablauföffnung (13) in das mit Wasser gefüllte Wasserreservoir (1) derart hineinragt, dass die Ablauföffnung (13) unterhalb des Flüssigkeitsspiegels im Wasserreservoir (1) und der Sogtank (3) mit Ausnahme des eintauchenden unteren Bereichs oberhalb des Flüssigkeitsspiegels angeordnet ist, und wobei der Wasserzulauf (5) derart ausgebildet ist, dass Wasser durch den Widerstand (6) durch den vom Ablaufen des Wassers gebildeten Unterdruck im Sogtank (3) durch die Ablauföffnung (13) in den Sogtank (3) gesaugt wird, wobei der im oberen Bereich des Sogtanks (3) vorgesehene Widerstand (6) einen Wasserfilter umfasst und der Sogtank (3) sowie der Wasserzulauf (5) derart ausgebildet sind, dass durch die potentielle Energie, die infolge der unterschiedlichen Höhen des Wasserzulaufs (5) und der unteren Ablauföffnung (13) aufgebaut ist, Wasser ohne angesaugte Luftanteile unter Überwindung des Widerstandes (6) durch den Sogtank (3) zu fließen vermag.

2. Schwerkraftgetriebene, hydraulische Vorrichtung nach Anspruch 1, **dadurch gekennzeichnet, dass** der Sogtank (3) als Kolbenzylindereinheit ausgebildet ist, wobei die Oberseite des Sogtanks (3) von einem reziprok im Sogtank (3) beweglich geführten Kolbenboden gebildet ist und im Wasserzulauf (5) und in der unteren Ablauföffnung (13) Sperrventile vorgesehen sind, die derart geschaltet sind, dass bei einlaufendem Wasser in den Sogtank (3) in einem Füllmodus durch ein den Wasserzulauf (5) regelndes oberes Ventil geöffnet und das untere Ventil geschlossen ist und in einem Arbeitsmodus bei auslaufendem Wasser das obere Ventil geschlossen und ein den Wasserablauf durch die untere Ablauföffnung (13) regelndes unteres Ventil geöffnet ist, wobei durch den Unterdruck im Sogtank (3) bei ablaufendem Wasser der Kolbenboden nach unten gezogen und durch den Überdruck im Füllmodus der Kolben nach oben gedrückt ist und wobei der Kolben über eine Kolbenstange mit einem, insbesondere mit einer Turbine (9) verbundenen Kraftabtrieb verbunden ist.

3. Schwerkraftgetriebene, hydraulische Vorrichtung nach einem der beiden vorhergehenden Ansprüche, **dadurch gekennzeichnet, dass** die Vorrichtung zwei oder mehr Sogtanks (3) aufweist, die in Reihe geschaltet mit einer Kurbelwelle (11) verbunden und nach der Art eines Kolbenmotors getaktet sind, wobei hierzu die Kolbenböden der Sogtanks (3) jeweils bei einer Stellung der Kurbelwelle (11) auf unterschiedlichen Höhen angeordnet sind und die Ventile nach der Art eines Hubkolbenmotors gesteuert sind.

4. Schwerkraftgetriebene, hydraulische Vorrichtung nach einem der vorhergehenden Ansprüche, **dadurch gekennzeichnet, dass** der Wasserzulauf (5) ein Zulaufbecken zum Zwischenspeichern von Zulaufwasser (7) umfasst, das oberhalb des Widerstandes (6) im Wasserzulauf (5) angeordnet ist.

5. Schwerkraftgetriebene, hydraulische Vorrichtung nach dem vorhergehenden Anspruch, **dadurch gekennzeichnet, dass** im Zulaufbecken eine wasserdurchlässige Filterschicht (8) vorgesehen ist.

6. Schwerkraftgetriebene, hydraulische Vorrichtung nach dem vorhergehenden Anspruch, **dadurch gekennzeichnet, dass** die Filterschicht (8) von einer wasserdurchlässigen Lage und einer darauf angeordneten Quarzsandschicht gebildet ist.

7. Schwerkraftgetriebene, hydraulische Vorrichtung nach einem der vorhergehenden Ansprüche, **dadurch gekennzeichnet, dass** der Wasserzulauf (5) eine Leitung umfasst, in der der Widerstand (6) angeordnet ist und die in den Sogtank (3) mündet, wobei der Sogtank (3) eine Querschnittsfläche aufweist, die mindestens fünfmal, bevorzugt mehr als zehnmal so groß ist wie die Querschnittsfläche des Mündungsbereichs der Leitung.

8. Schwerkraftgetriebene, hydraulische Vorrichtung nach einem der vorhergehenden Ansprüche, **dadurch gekennzeichnet, dass** eine Rückführpumpe (4) vorgesehen ist, über die Wasser aus dem Wasserreservoir (1) in den Wasserzulauf (5) förderbar ist.

9. Schwerkraftgetriebene, hydraulische Vorrichtung nach dem vorhergehenden Anspruch, **dadurch gekennzeichnet, dass** die Fördermenge der Rückführpumpe (4) der Wassermenge entspricht, die aus der Ablauföffnung (13) des Sogtanks (3) in das Wasserreservoir (1) strömt.

10. Schwerkraftgetriebene, hydraulische Vorrichtung nach einem der vorhergehenden Ansprüche, **dadurch gekennzeichnet, dass** der Sogtank (3) ein Fassungsvermögen von mehr als 100l, bevorzugt von 150l und mehr aufweist.

11. Schwerkraftgetriebene, hydraulische Vorrichtung nach einem der vorhergehenden Ansprüche, **dadurch gekennzeichnet, dass** der Widerstand (6) zusätzlich zum Wasserfilter eine Turbine (9) umfasst.

12. Schwerkraftgetriebene, hydraulische Vorrichtung nach dem vorhergehenden Anspruch in Verbindung mit Anspruch 8 oder Anspruch 9, **dadurch gekennzeichnet, dass** die Rückführpumpe (4) über die Turbine (9) mit Energie versorgt ist.

13. Schwerkraftgetriebene, hydraulische Vorrichtung nach einem der beiden vorhergehenden Ansprüche, **dadurch gekennzeichnet, dass** der Turbine (9) ein Speicher für elektrische Energie nachgeschaltet ist.

## Claims

1. Gravity-driven hydraulic device with a water reservoir which has an inlet and an outlet, water being able to run out of the water reservoir into a water reservoir (1) against a resistance (6) which slows down the flow, and a water inlet (5) being provided via which water replacing water running out can be supplied to the water reservoir, the water reservoir being formed by an aspirating tank (3) which has a lower discharge opening (13) for the discharge of the water stored therein and projects at its underside with a discharge opening (13) into the water reservoir (1) filled with water in such a way that the discharge opening (13) is arranged below the liquid level in the water reservoir (1) and the suction tank (3), with the exception of the immersed lower region, is arranged above the liquid level, and wherein the water inlet (5) is embodied such that water is sucked into the sucking tank (3) through the resistance (6) by the negative pressure formed in the sucking tank (3) by the drainage of the water through the drainage opening (13), wherein the resistance (6) provided in the upper portion of the sucking tank (3) comprises a water filter, and the sucking tank (3) and the water inlet (5) are embodied such that due to the potential energy built up as a result of the different heights of the water inlet (5) and the lower outlet opening (13), water without sucked-in air components is able to flow through the sucking tank (3) while overcoming the resistance (6).

2. Gravity-driven hydraulic device according to claim 1, **characterized in that** the sucking tank (3) is embodied as a piston-cylinder unit, the upper side of the sucking tank (3) being formed by a piston base reciprocally guided movably in the sucking tank (3), and shut-off valves being provided in the water inlet (5) and in the lower discharge opening (13), which shut-off valves are switched in such a manner that, when water is flowing into the suction tank (3), in a filling mode an upper valve controlling the water inflow (5) is open and the lower valve is closed, and in a working mode, when water is flowing out, the upper valve is closed and a lower valve controlling the water outflow through the lower discharge opening (13) is open, wherein the bottom of the piston is pulled down by the negative pressure in the suction tank (3) when the water is draining off and the piston is pressed up by the positive pressure in the filling mode, and wherein the piston is connected via a piston rod to a power take-off, in particular connected to a turbine (9).

3. Gravity-driven hydraulic device according to one of the two preceding claims, **characterized in that** the device comprises two or more suction tanks (3) which are connected in series to a crankshaft (11) and are timed in the manner of a piston motor, for which purpose the piston heads of the suction tanks (3) are each arranged at different heights in one position of the crankshaft (11) and the valves are controlled in the manner of a reciprocating piston motor.

4. Gravity-driven hydraulic device according to one of the preceding claims, **characterized in that** the water inlet (5) comprises an inlet basin for intermediate storage of inlet water (7), which is arranged above the resistance (6) in the water inlet (5).

5. Gravity-driven hydraulic device according to the preceding claim, **characterized in that** a water-permeable filter layer (8) is provided in the inlet basin.

6. Gravity-driven hydraulic device according to the preceding claim, **characterized in that** the filter layer (8) is formed by a water-permeable layer and a quartz sand layer arranged thereon.

7. Gravity-driven hydraulic device according to one of the preceding claims, **characterized in that** the water inlet (5) comprises a conduit in which the resistance (6) is arranged and which opens into the suction tank (3), the suction tank (3) having a cross-sectional area which is at least five times, preferably more than ten times, as large as the cross-sectional area of the mouth region of the conduit.

8. Gravity-driven hydraulic device according to one of the preceding claims, **characterized in that** a recirculation pump (4) is provided, via which water can be conveyed from the water reservoir (1) into the water inlet (5).

9. Gravity-driven hydraulic device according to the preceding claim, **characterized in that** the delivery rate of the recirculation pump (4) corresponds to the amount of water flowing from the discharge opening (13) of the suction tank (3) into the water reservoir (1).

10. Gravity driven hydraulic device according to one of the preceding claims, **characterized in that** the suction tank (3) has a capacity of more than 1001, preferably 1501 and more.

11. Gravity driven hydraulic device according to any one of the preceding claims, **characterized in that** the resistance (6) comprises a turbine (9) in addition to the water filter.

12. Gravity-driven hydraulic device according to the preceding claim in connection with claim 8 or claim 9, **characterized in that** the recirculation pump (4) is supplied with energy via the turbine (9).

13. Gravity-driven hydraulic device according to one of the two preceding claims, **characterized in that** an accumulator for electrical energy is connected downstream of the turbine (9).

## Revendications

1. Dispositif hydraulique commandé par gravité avec un réservoir d'eau présentant une entrée et une sortie, l'eau pouvant s'écouler du réservoir d'eau dans un réservoir d'eau (1) contre une résistance (6) ralentissant l'écoulement, et une entrée d'eau (5) étant prévue, par laquelle de l'eau remplaçant l'eau écoulée peut être amenée au réservoir d'eau, le réservoir d'eau étant formé par un réservoir d'aspiration (3). qui présente une ouverture de sortie inférieure (13) pour l'évacuation de l'eau qui y est stockée et qui, sur sa face inférieure, fait saillie avec une ouverture de sortie (13) dans le réservoir d'eau (1) rempli d'eau de telle sorte que l'ouverture de sortie (13) est disposée en dessous du niveau de liquide dans le réservoir d'eau (1) et que le réservoir d'aspiration (3), à l'exception de la zone inférieure immergée, est disposé au-dessus du niveau de liquide, et dans lequel l'entrée d'eau (5) est formée de telle sorte que l'eau est aspirée à travers la résistance (6) dans le réservoir d'aspiration (3) par la pression négative dans le réservoir d'aspiration (3) formée par le drainage de l'eau, dans lequel la résistance (6) prévue dans la partie supérieure du réservoir d'aspiration (3) comprend un filtre à eau, et le réservoir d'aspiration (3) et l'entrée d'eau (5) sont formés de telle sorte que que, grâce à l'énergie potentielle accumulée en raison des hauteurs différentes de l'entrée d'eau (5) et de l'ouverture de sortie inférieure (13), de l'eau sans composants d'air aspirés peut s'écouler à travers le réservoir d'aspiration (3) en surmontant la résistance (6).

2. Dispositif hydraulique commandé par gravité selon la revendication 1, **caractérisé en ce que** le réservoir d'aspiration (3) est conçu comme une unité piston-cylindre, le côté supérieur du réservoir d'aspiration (3) étant formé par un fond de piston guidé en va-et-vient dans le réservoir d'aspiration (3), et des vannes d'arrêt étant prévues dans l'entrée d'eau (5) et dans l'ouverture de décharge inférieure (13), lesquelles vannes d'arrêt sont commutées de telle sorte que, lorsque de l'eau s'écoule dans le réservoir d'aspiration (3), l'eau s'écoule dans l'ouverture de décharge inférieure (13), **en ce que**, lorsque de l'eau s'écoule dans le réservoir d'aspiration (3), dans un mode de remplissage, une vanne supérieure commandant l'entrée d'eau (5) est ouverte et la vanne inférieure est fermée et, dans un mode de travail, lorsque de l'eau s'écoule, la vanne supérieure est fermée et une vanne inférieure commandant l'écoulement d'eau à travers l'ouverture de sortie inférieure (13) est ouverte, dans lequel le fond du piston est tiré vers le bas par la pression négative dans le réservoir d'aspiration (3) lorsque l'eau s'écoule et le piston est pressé vers le haut par la pression positive dans le mode de remplissage et dans lequel le piston est relié par une tige de piston à une prise de force, en particulier reliée à une turbine (9).

3. Dispositif hydraulique commandé par gravité selon l'une des deux revendications précédentes, **caractérisé en ce que** le dispositif comprend deux ou plusieurs réservoirs d'aspiration (3) qui sont reliés en série à un vilebrequin (11) et sont commandés à la manière d'un moteur à piston, les fonds de piston des réservoirs d'aspiration (3) étant à cet effet disposés à des hauteurs différentes lorsque le vilebrequin (11) est dans une position, et les soupapes étant commandées à la manière d'un moteur à piston alternatif.

4. Dispositif hydraulique commandé par gravité selon l'une des revendications précédentes, **caractérisé en ce que** l'entrée d'eau (5) comprend un réservoir d'entrée pour le stockage intermédiaire de l'eau d'entrée (7), qui est disposé au-dessus de la résistance (6) dans l'entrée d'eau (5).

5. Dispositif hydraulique commandé par gravité selon la revendication précédente, **caractérisé en ce qu'**une couche filtrante perméable à l'eau (8) est prévue dans le bassin d'entrée.

6. Dispositif hydraulique commandé par gravité selon la revendication précédente, **caractérisé en ce que** la couche filtrante (8) est formée par une couche perméable à l'eau et une couche de sable quartzeux disposée sur celle-ci.

7. Dispositif hydraulique commandé par gravité selon l'une quelconque des revendications précédentes, **caractérisé en ce que** l'entrée d'eau (5) comprend un conduit dans lequel est disposée la résistance (6) et qui débouche dans le réservoir d'aspiration (3), le réservoir d'aspiration (3) ayant une surface de section transversale qui est au moins cinq fois, de préférence plus de dix fois, plus grande que la surface de section transversale de la zone d'embouchure du conduit.

8. Dispositif hydraulique commandé par gravité selon l'une des revendications précédentes, **caractérisé en ce qu'**il est prévu une pompe de recirculation (4) par laquelle l'eau peut être transportée du réservoir d'eau (1) dans l'entrée d'eau (5).

9. Dispositif hydraulique commandé par gravité selon la revendication précédente, **caractérisé en ce que** le débit de la pompe de recirculation (4) correspond à la quantité d'eau s'écoulant de l'ouverture de décharge (13) du réservoir d'aspiration (3) dans le réservoir d'eau (1).

10. Dispositif hydraulique commandé par gravité selon l'une des revendications précédentes, **caractérisé en ce que** le réservoir d'aspiration (3) a une capacité supérieure à 100l, de préférence de 150l et plus.

11. Dispositif hydraulique commandé par gravité selon l'une quelconque des revendications précédentes, **caractérisé en ce que** la résistance (6) comprend une turbine (9) en plus du filtre à eau.

12. Dispositif hydraulique commandé par gravité selon la revendication précédente en liaison avec la revendication 8 ou la revendication 9, **caractérisé en ce que** la pompe de recirculation (4) est alimentée par la turbine (9).

13. Dispositif hydraulique commandé par gravité selon l'une des deux revendications précédentes, **caractérisé en ce qu'**un accumulateur d'énergie électrique est monté en aval de la turbine (9).
